# EUROPÄISCHE PATENTSCHRIFT

(11) **EP 0 510 012 B1**
(45) Veröffentlichungstag und Bekanntmachung des Hinweises auf die Patenterteilung: **29.06.1994**
(21) Anmeldenummer: 91900799.7
(22) Anmeldetag: 08.12.1990
(51) Int. Cl.: G11B 33/04

(54) **BEHÄLTER ZUR STEHENDEN AUFNAHME VON DISKETTEN UND DERGLEICHEN**
CONTAINER FOR UPRIGHT STORAGE OF DISKETTES AND THE LIKE
RECIPIENT POUR LA RECEPTION VERTICALE DE DISQUETTES ET ANALOGUE

(30) Priorität: 11.01.1990 DE 4000641
(43) Veröffentlichungstag der Anmeldung: 28.10.1992
(73) Patentinhaber: Louis Leitz KG, D-70469 Stuttgart (DE)
(72) Erfinder: RENNER, Reinhard, D-7300 Esslingen (DE); SCHLIESSER, Michael, D-7300 Esslingen (DE)
(74) Vertreter: Wolf, Eckhard, Dr.-Ing.
(86) Internationale Anmeldenummer: EP9002134
(87) Internationale Veröffentlichungsnummer: WO9111005

(56) Entgegenhaltungen:
- EP-A- 0 293 272
- WO-A-86/00746
- DE-U- 8 620 004
- GB-A- 2 185 237
- US-A- 4 257 524
- US-A- 4 317 603
- US-A- 4 723 662

## Beschreibung

Die Erfindung betrifft einen Behälter zur stehenden Aufnahme von flachen, vorzugsweise rechteckigen oder quadratischen Gegenständen, wie Disketten und dergleichen, mit einem eine Standfläche und mehrere im Abstand voneinander angeordnete, vorzugsweise zueinander parallele Einstellfächer für die Gegenstände aufweisenden Unterteil und einem am Unterteil angelenkten Klappdeckel.

Es sind Diskettenboxen dieser Art bekannt, bei denen das Unterteil nach Art eines Karteikastens kastenförmig ausgebildet ist und die Einstellfächer für die Disketten hintereinander um eine horizontale bodennahe Achse kippbar im Unterteil angelenkt sind, während der Klappdeckel im rückwärtigen Bereich des Unterteils an den Seitenwangen angelenkt ist. Die Herstellung und die Montage der bekannten Diskettenboxen ist relativ aufwendig und daher teuer.

Aus GB-A- 2 185 237 ist ein Behälter gemäß den Oberbegriffen der Patentansprüche 1 und 6 bekannt. Der Deckel dieses Behälters weist in den beiden Seitenwänden jeweils ein Loch auf, in welches ein Zapfen des Basisteiles des Behälters greift. Der Deckel ist damit um die durch die Zapfen gebildete Achse schwenkbar.

Der Erfindung liegt die Aufgabe zugrunde, einen Behälter der eingangs angegebenen Art zu entwickeln, der eine übersichtliche Aufbewahrung der in Betracht kommenden Gegenstände sowie eine einfache Handhabung beim Beschicken und Entnehmen der Gegenstände gewährleistet und der trotzdem besonders einfach herstellbar und montierbar ist.

Diese Aufgabe wird durch Behälter gemäß den Ansprüchen 1 und 6 gelöst.

Es wird vorgeschlagen, daß die Einstellfächer bodenseitig durch jeweils zwei langgestreckte, in ihrer Längserstreckung schräg nach vorne bzw. hinten über die Ebene der Standfläche überstehende, paarweise einen nach oben offenen Winkel miteinander einschließende Auflageflächen für die einzustellenden Gegenstände begrenzt sind. Vorteilhafterweise schließen die Auflageflächen der Einstellfächer paarweise einen nach oben offenen rechten Winkel miteinander ein, wobei die nach vorne weisenden Auflageflächen etwa 20 bis 40°, vorzugsweise 30° gegenüber der Standfläche geneigt sind.

Gemäß einer bevorzugten Ausgestaltung der Erfindung sind die Einstellfächer seitlich durch an den Längsseitenrändern der Auflageflächen nach oben überstehende, in Längserstreckung der Auflageflächen vorzugsweise durchgehend ausgebildete Trennrippen oder -wände begrenzt.

Die Auflageflächen aller Einstellfächer sind vorteilhafterweise einstückig miteinander verbunden, während die Trennrippen oder -wände einstückig mit den Auflageflächen verbunden sind. Um zwischen den im Behälter befindlichen Gegenständen ein für das einfache Einstellen und Entnehmen notwendiges ausreichendes Spiel zu gewährleisten, können die Trennrippen im Bereich ihrer Wurzel mit einer die Breite der Auflagefläche verkleinernden Materialverdickung versehen werden.

Die Auflageflächen eines jeden Einstellfaches bilden vorteilhafterweise einen durchgehenden Boden und sind an ihren einander zugewandten Schmalseitenkanten einstückig miteinander verbunden. Dazuhin sind die vorderen bzw. hinteren Auflageflächen zweier benachbarter Einstellfächer zweckmäßig jeweils in zueinander parallelen Ebenen, vorzugsweise in der gleichen Ebene angeordnet.

Um die in den Behälter eingestellten Gegenstände trotz dichter Packung einfach entnehmen zu können, weist die schräg nach vorne weisende Auflagefläche eines jeden Einstellfaches eine quer zu ihrer Längserstreckung verlaufende Kippkante auf, über die der eingestellte Gegenstand mit einem Teil seiner auf der Auflagefläche aufliegenden Unterkante frei übersteht. Vorteilhafterweise ist eine sich im Bereich der Kippkante an die vordere Auflagefläche nach vorne hin anschließende, im wesentlichen parallel zur Standfläche ausgerichtete Kippfläche vorgesehen, die zur besseren Handhabung beim Entnehmen der Gegenstände vorzugsweise eine Oberflächenaufrauhung oder Querriffelung trägt. Die Kippfläche ist zweckmäßig an ihrer der Kippkante gegenüberliegenden Seite durch eine vorzugsweise die benachbarten Trennrippen miteinander verbindende Anschlagfläche begrenzt, die beim Entnahmevorgang sicherstellt, daß die betreffenden Gegenstände nicht unkontrolliert nach vorne herausgleiten können. Zur weiteren Verbesserung des Entnahmevorgangs kann eine parallel zur Kippkante ausgerichtete, nach oben über die Kippfläche überstehende Kipprippe vorgesehen werden, während die Trennrippen jeweils mindestens eine im wesentlichen senkrecht zur benachbarten Kipprippe ausgerichtete keilförmige Führungsrippe für die Zentrierung der Gegenstände beim Entnahmevorgang aufweisen. Das in der beschriebenen Weise ausgebildete Unterteil eignet sich besonders zur Herstellung im Spritzgußverfahren aus Kunststoff.

Vorzugsweise bilden die hinteren Auflageflächen in ihrer Gesamtheit eine einstückige Rückwand des Unterteils, wobei der Klappdeckel im Bereich der quer zur Längserstreckung der Auflageflächen ausgerichteten Oberkante der Rückwand um eine horizontale Achse schwenkbar angeordnet werden kann.

Vorteilhafterweise bildet der Klappdeckel einen teilweise offenen Hohlkörper vorzugsweise aus durchsichtigem Kunststoffmaterial, der an zwei an einer gemeinsamen Kante miteinander verbundenen, im wesentlichen rechteckigen Breitseitenwänden und an zwei einander gegenüberliegenden, an je zwei aneinander anschließenden Kanten mit den Breitseitenwänden verbundenen, im wesentlichen quadratischen Schmalseitenwänden geschlossen ist, und dessen Breitseitenwände je eine der gemeinsamen Kante gegenüberliegende freie Randkante und dessen Schmalseitenwände zwei zueinander senkrechte freie Randkanten aufweisen. Grundsätzlich ist es jedoch auch möglich, daß der einen teilweise offenen Hohlkörper bildende Klappdeckel an einer viertelzylindrischen Breitseitenwand und an zwei einander gegenüberliegenden, an einer viertelkreisförmigen Kante mit der Breitseitenwand verbundenen Schmalseitenwänden geschlossen ist, wobei die gekrümmte Breitseitenwand zwei einander gegenüberliegende freie Randkanten und die Schmalseitenwände je zwei zueinander senkrechte freie Randkanten aufweisen.

Die Erfindung sieht vor, daß an einer freien Breitseitenrandkante des Klappdeckels mindestens eine zum Deckelinneren hin gekrümmte, randoffene Scharnierlasche angeformt ist, die in eine im Bereich der Oberkante des Unterteils angeordnete Schlitzöffnung einführbar ist und die einen im Bereich der Schlitzöffnung in Form einer Rippe am Unterteil angeformten Scharnierzapfen mit ihrer randoffenen konkaven Seite teilweise umfaßt und beim Öffnen und Schließen des Klappdeckels mit ihrer konvexen Außenfläche an einer die Schlitzöffnung begrenzenden Gleitfläche geführt ist. Weiter kann im Bereich der Scharnierlasche mindestens eine entgegen der Scharnierkrümmung hakenförmig gebogene, in geschlossener Endstellung des Klappdeckels einen die Schlitzöffnung begrenzenden Steg hintergreifende und bei geöffnetem Deckel vorzugsweise gegen die Rückwand anschlagende Haltenase angeformt sein. Vorteilhafterweise ist die Schlitzöffnung durch mindestens eine Materialbrücke unterbrochen, während die Scharnierlasche mindestens eine die Materialbrücke umfassende randoffene Aussparung aufweist. Um eine zuverlässige Arretierung des Klappdeckels im geöffneten Zustand zu gewährleisten, ist die Materialbrücke mit einer parallel zur Schlitzöffnung ausgerichteten Rastvertiefung zur Aufnahme der im Bereich der randoffenen Aussparung befindlichen freien Deckelkante in der geöffneten Endstellung des Klappdeckels versehen. Um dazuhin ein versehentliches Abnehmen des Klappdeckels zu vermeiden, ist der Klappdeckel nur in einem eng begrenzten Schwenkbereich außerhalb der geschlossenen und der geöffneten Endstellung vom Unterteil nach oben hin abnehmbar.

Gemäß einer weiteren bevorzugten Ausgestaltung der Erfindung sind die Einstellfächer in ihrer Gesamtheit von einer am Unterteil angeformten, im wesentlichen parallel zu den benachbarten Auflageflächen verlaufenden Schulter umrandet, gegen die die freien Randkanten des Klappdeckels im geschlossenen Zustand dicht anliegen. Um den Klappdeckel trotzdem leicht öffnen zu können, weist er im Bereich seiner freien Randkanten eine randoffene Greifaussparung auf, während die Schulter im Bereich der Greifaussparung unter Bildung einer Griffmulde verformt sein kann. Eine weitere Verbesserung in dieser Hinsicht wird dadurch erzielt, daß oberhalb der Greifaussparung am Klappdeckel ein geriffeltes oder aufgerautes Greiffeld angeordnet ist.

Gemäß einer weiteren bevorzugten Ausgestaltung der Erfindung bilden die Gesamtheit der vorderen Auflageflächen der Einstellfächer und die Standfläche des Unterteils einen keilförmigen Sockelteil, an dessen rückwärtigem Ende die Rückwand schräg nach hinten übersteht und dessen vorderes Ende durch eine zur Rückwand im wesentlichen parallele Vorderwand begrenzt ist. In die Vorderwand kann dabei eine langgestreckte Ablagewanne zur Aufnahme von Schreibgeräten und dergleichen eingeformt werden. Die Standfläche des Behälters wird dabei im wesentlichen durch am Sockelteil nach unten weisende Randkanten gebildet, wobei zur Erhöhung der Standfestigkeit zumindest im rückwärtigen Bereich nach unten über die Randkanten des Sockelteils überstehende Füße aus elastomerem Material angeordnet sein können und im Bereich der schrägen Außenseite der Rückwand eine bis zur Standfläche reichende senkrechte Stützstruktur oder Stützwand angeformt sein kann.

Im folgenden wird die Erfindung anhand eines in der Zeichnung in schematischer Weise dargestellten Ausführungsbeispiels näher erläutert. Es zeigen
- Fig. 1: eine schaubildliche Darstellung einer Diskettenbox mit geöffnetem Klappdeckel;
- Fig. 2: eine Seitenansicht der Diskettenbox nach Fig. 1 mit geschlossenem Klappdeckel;
- Fig. 3: eine Frontansicht der Diskettenbox nach Fig. 1;
- Fig. 4a: bis c eine Draufsicht, einen Querschnitt und eine Rückseitenansicht des Unterteils der Diskettenbox;

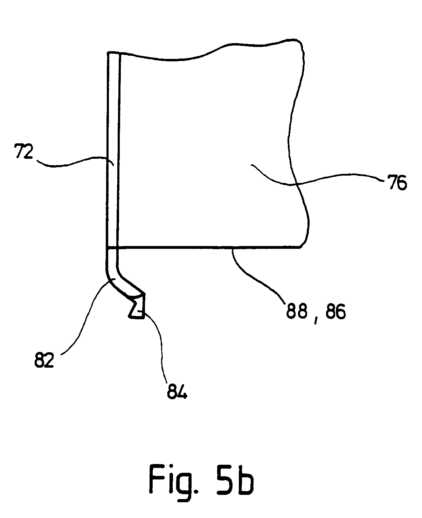

- Fig. 5a und b: eine Rückseitenansicht und eine Seitenansicht des Klappdeckels der Diskettenbox.

Die in der Zeichnung dargestellte Diskettenbox besteht aus einem mit Einstellfächern 10 für Disketten 12 versehenen Unterteil 14 und einem im Bereich der Oberkante 16 der Rückwand 18 des Unterteils 14 um eine horizontale Achse schwenkbar angeordneten Klappdeckel 20. Das als Spritzgußteil aus Kunststoff ausgebildete Unterteil 14 ist aus einem im wesentlichen keilförmigen Sockel 22 und der am rückwärtigen Teil des Sockels 22 schräg nach oben überstehenden Rückwand 18 zusammengesetzt. Die Vorderwand 24 und die im wesentlichen dreieckigen Seitenwände 26 des Sockels 22 spannen mit ihren Unterkanten 28, 30 eine Standfläche auf, mit der das Unterteil auf einer ebenen Unterlage aufstellbar ist. Zur Erhöhung der Standfestigkeit ist im mittleren rückwärtigen Bereich des Unterteils 14 eine als Rechteckrohr ausgebildete Stützwand oder Stützstruktur 32 vorgesehen, deren Unterkante 34 bis zur Standfläche reicht. Die über die Unterkanten 30 der Seitenwände 26 und mittig über die Unterkante 34 der Stützwand 32 nach unten überstehenden Nocken 36 sorgen dafür, daß das Unterteil in einer stabilen Dreipunktauflage kippfrei auf einer gegebenenfalls auch etwas unebenen Unterlage aufstellbar ist. Weiter sind zwei im Abstand voneinander angeordnete Standfüße 38 aus elastomerem Material mit einem hohen Reibkoeffizienten vorgesehen, die gewährleisten, daß das Unterteil ausreichend auf der Unterlage haftet.

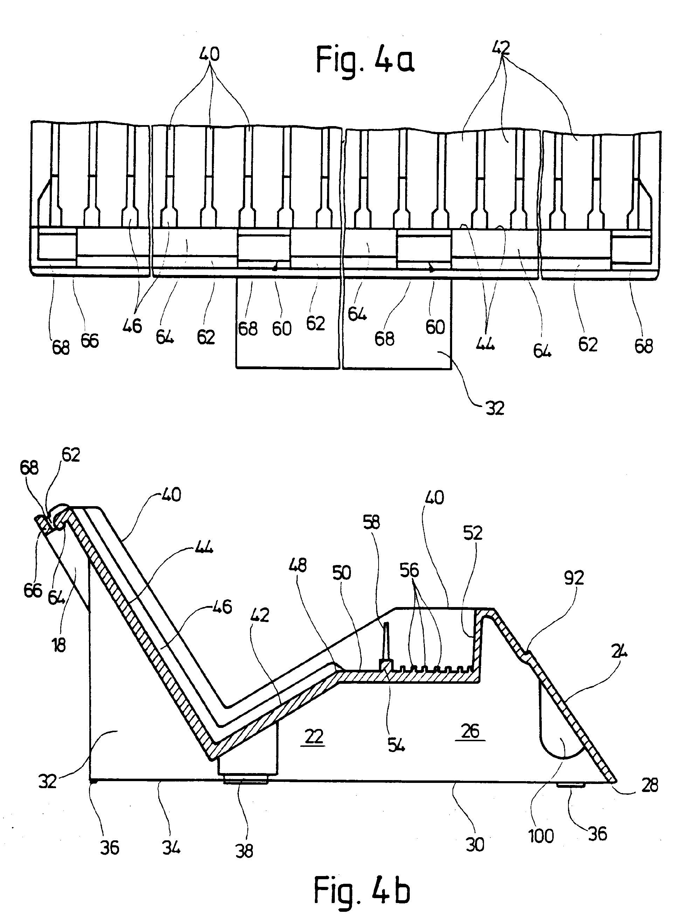

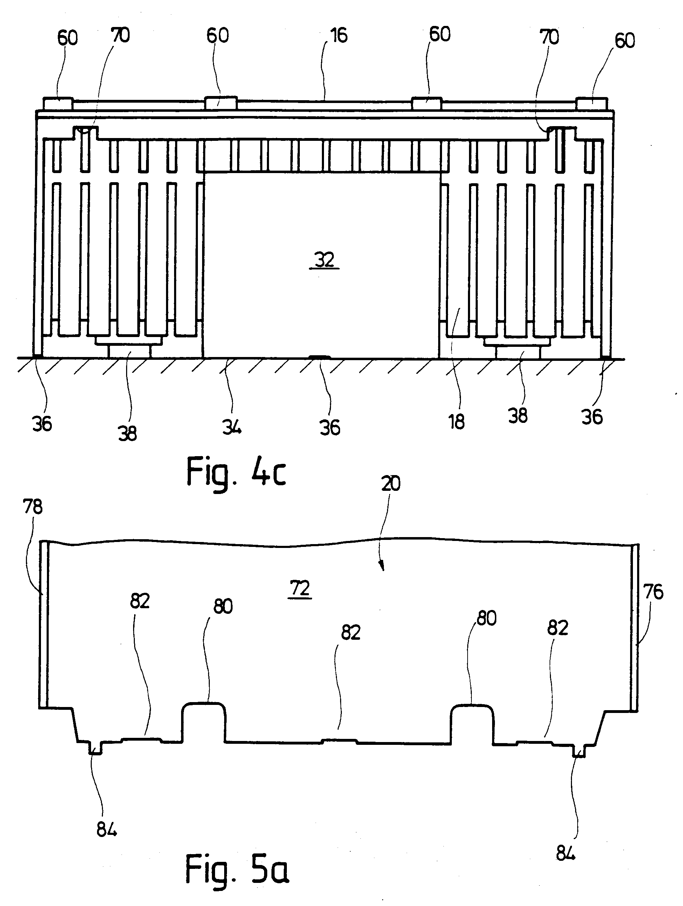

Die einzelnen von vorne zugänglichen Einstellfächer 10 sind seitlich durch im Abstand voneinander angeordnete Trennrippen 40 und bodenseitig durch langgestreckte Auflageflächen 42, 44 begrenzt. Die im Sockel 22 befindlichen Auflageflächen 42 und die im Bereich der Rückwand 18 befindlichen Auflageflächen 44 sind jeweils schräg zur Standfläche angestellt und schließen einen nach oben offenen rechten Winkel miteinander ein. Wie insbesondere aus Fig. 4b zu ersehen ist, sind die Auflageflächen 42 im Bereich des Sockels um etwa 30° und die Auflageflächen im Bereich der Rückwand um etwa 60° gegenüber der Standfläche geneigt. Die Trennrippen 40 stehen etwa 10 mm über die betreffenden Auflageflächen über und bieten somit den in gekippter Lage in die Einstellfächer 10 eingestellten Disketten 12 einen sicheren seitlichen Halt. Mit den Verdickungen 46 im Wurzelbereich der Trennrippen 40 wird zusätzlich erreicht, daß die Disketten innerhalb der Einstellfächer 10 in einem gewissen Abstand von den Trennrippen 40 gehalten werden, so daß zu den Disketten 12 in den benachbarten Einstellfächern ein Abstand eingehalten wird, der das Einstellen und Entnehmen der Disketten erleichtert.

Die sockelseitigen Auflageflächen 42 gehen in ihrem vorderen Bereich über eine Kippkante 48 in eine zur Standfläche parallele Kippfläche 50 über, die zur Vorderwand 24 hin durch eine die beiden benachbarten Trennrippen 40 miteinander verbindende Anschlagwand 52 begrenzt ist. Weiter ist im Abstand von der Kippkante 48 zusätzlich eine über die Kippfläche 50 überstehende Kipprippe 54 vorgesehen, die ein zuverlässiges, leicht nach vorne geneigtes Abkippen der Disketten 12 beim Entnahmevorgang ermöglicht. Die Querriffelung 56 im vorderen Bereich der Kippfläche 50 sorgt für einen ausreichenden Reibwiderstand, der verhindert, daß die leicht nach vorne gekippte Diskette im Zuge des Entnahmevorgangs auf der Kippfläche versehentlich wieder nach hinten gleiten kann. Im Bereich der Kipprippe sind zusätzlich an den Trennrippen 40 nach oben weisende und sich nach dorthin verjüngende Keilrippen 58 vorgesehen, die die Diskette beim Entnahmevorgang seitlich führen und dabei ein seitliches Wegkippen verhindern.

An der Oberkante 16 der Rückwand befindet sich eine durch mehrere Materialbrücken 60 in ihrer Längsrichtung unterbrochene Schlitzöffnung 62, die auf der Rückwandseite durch in Form von Rippen angeformte Scharnierzapfen 64 und auf der gegenüberliegenden Seite durch einen langgestreckten Steg 66 begrenzt ist. Die Materialbrücken 60 weisen an ihrer Oberseite parallel zur Schlitzöffnung 62 verlaufende Rastvertiefungen 68 auf, die an ihrer Rückseite durch den Steg 66 begrenzt sind. Der Steg 66 weist seinerseits zwei im Abstand voneinander angeordnete, nach unten randoffene Aussparungen 70 auf.

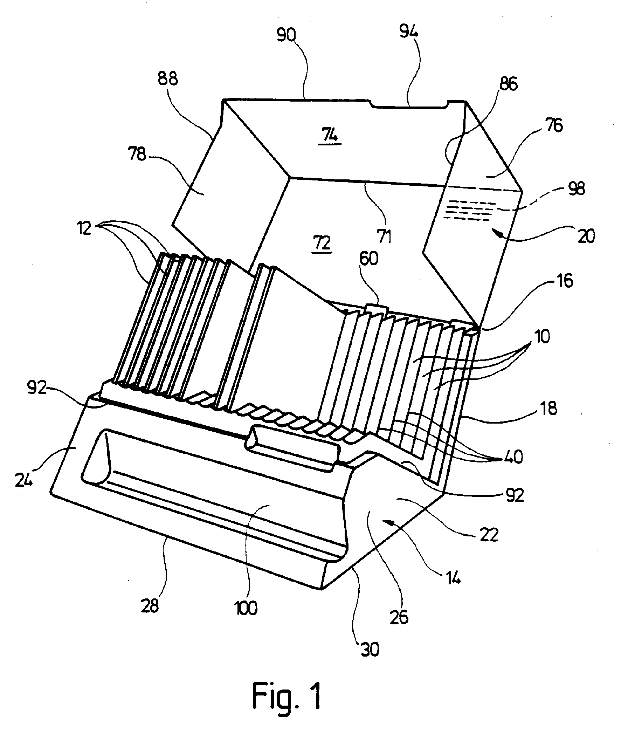

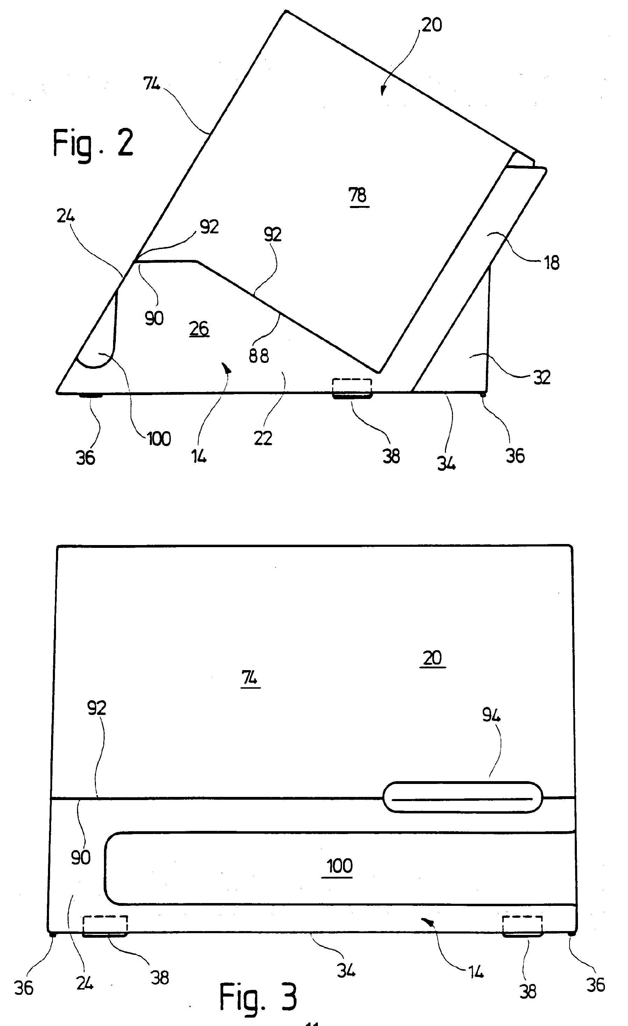

Der aus einem durchsichtigen Kunststoff oder aus Acrylglas bestehende Klappdeckel 20 bildet einen teilweise offenen, im wesentlichen quaderförmigen Hohlkörper, der durch zwei an einer Kante 71 miteinander verbundene, zueinander senkrechte rechteckige Breitseitenwände 72, 74 und zwei einander gegenüberliegende, im wesentlichen quadratische Schmalseitenwände 76, 78 begrenzt ist. Im Bereich der freien Kante der Breitseitenwand 72 stehen drei durch randoffene Aussparungen 80 voneinander getrennte Scharnierlaschen 82 über, die an ihren freien Enden zum Inneren des Klappdeckels hin gekrümmt sind. An den beiden äußeren Scharnierlaschen ist außerdem je eine Haltenase 84 angeformt, die eine nach dem Deckeläußeren weisende hakenförmige Vertiefung aufweist. Der Klappdeckel 20 kann mit seinen Scharnierlaschen 82 von oben her so in die Schlitzöffnung 62 eingeführt werden, daß die randoffenen Aussparungen 80 die Materalbrücken 60 seitlich übergreifen und die Scharnierlaschen 82 die Scharnierzapfen 64 teilweise umfassen. Bei geschlossenem Klappdeckel 20 greifen die Haltenasen 84 in die im Steg 66 befindlichen Aussparungen 70 ein und verhindern dadurch, daß der Klappdeckel 20 in der geschlossenen Stellung versehentlich aus der Schlitzöffnung herausgezogen werden kann. In der geschlossenen Stellung liegt der Klappdeckel 20 außerdem mit den freien Kanten 86, 88 seiner Schmalseitenwände 76, 78 und der freien Kante 90 seiner Breitseitenwand 74 gegen eine die Einstellfächer 10 umfassende, zusammenhängende Schulter 92 des Unterteils dichtend an (vgl. insbesondere Fig. 2 und 3). Im geöffneten Zustand (Fig. 1) schlägt der Klappdeckel 20 mit der Rückseite der Haltenasen 84 gegen die Außenseite der Rückwand 18 und zugleich mit der Außenseite seiner Breitseitenwand 72 im Bereich der Scharnierlaschen 82 gegen den Steg 66 an. Weiter rastet der Klappdeckel 20 in dieser Stellung mit der Grundkante der randoffenen Aussparungen 80 in die Rastvertiefungen 68 der Materialbrücken 60 ein, so daß er von hier aus nur unter Überwindung eines gewissen Widerstands in die Schließstellung geschwenkt werden kann. Auch in der geöffneten Stellung kann der Klappdeckel aufgrund der sich mit den Scharnierzapfen 64 verhakenden Scharnierlaschen 82 nicht vom Unterteil 14 abgenommen werden. Um den Klappdeckel 20 abzuheben, muß er vielmehr bewußt in eine Zwischenlage zwischen der geschlossenen und der offenen Endstellung gebracht werden.

Der Klappdeckel 20 weist ferner im Bereich der freien Randkante 90 seiner Breitseitenwand 74 eine randoffene Greifaussparung 94 auf, die durch eine die Schulter 92 unterbrechende Griffmulde 96 in der Vorderwand 24 des Unterteils 14 leicht zugänglich ist. Zusätzlich ist an der Breitseitenwand 72 oberhalb der Greifaussparung 94 ein geriffeltes Greiffeld 98 vorgesehen.

In die im wesentlichen parallel zur Rückwand 18 ausgerichtete Vorderwand 24 des Unterteils ist eine Ablagewanne 100 zur Aufnahme eines Schreibgeräts eingeformt.

## Patentansprüche

1. Behälter zur stehenden Aufnahme von flachen, vorzugsweise rechteckigen oder quadratischen Gegenständen, wie Disketten (12) oder dergleichen, mit einem eine Standflächen (28,30,34) und mehrere im Abstand voneinander angeordnete, vorzugsweise zueinander parallele Einstellfächer (10) für die Gegenstände (12) aufweisenden Unterteil (14) und mit einem am Unterteil (14) angelenkten Klappdeckel (20), wobei jedes der Einstellfächer (10) bodenseitig durch zwei langgestreckte, in ihrer Längserstreckung schräg nach oben über die Ebene der Standfläche (28,30,34) überstehende, paarweise einen nach oben offenen Winkel miteinander einschließende Auflageflächen (42,44) für die einzustellenden Gegenstände (12) begrenzt sind, **dadurch gekennzeich****net,** daß an einer freien Breitseitenrandkante des Klappdeckels (20) mindestens eine zum Deckelinneren hin gekrümmte, randoffene Scharnierlasche (82) angeformt ist, die in eine im Bereich der Oberkante (16) der Unterteil-Rückwand (18) angeordnete Schlitzöffnung (62) einführbar ist und die einen im Bereich der Schlitzöffnung (62) in Form einer Rippe am Unterteil angeformten Scharnierzapfen (64) mit ihrer randoffenen konkaven Seite teilweise umfaßt und beim Öffnen und Schließen des Klappdeckels mit ihrer konvexen Außenfläche an einer die Schlitzöffnungen (62) begrenzenden Gleitfläche (Steg 66) geführt ist.

2. Behälter nach Anspruch 1, **gekennzeichnet durch** mindestens eine im Bereich der Scharnierlasche (82) angeformte, entgegen der Scharnierkrümmung hakenförmig gebogene, in geschlossener Endstellung des Klappdeckels (20) einen die Schlitzöffnung (62) begrenzenden Steg (66) hintergreifende und bei geöffnetem Deckel vorzugsweise gegen die Rückwand (18) anschlagende Haltenase (84).

3. Behälter nach Anspruch 1 oder 2, **dadurch gekennzeichnet,** daß die Schlitzöffnung (62) durch mindestens eine Materialbrücke (60) und die Scharnierlasche (82) durch mindestens eine die Materialbrücke (60) umfassende randoffene Aussparung (80) unterbrochen ist.

4. Behälter nach Anspruch 3, **dadurch gekennzeichnet,** daß die Materialbrücke (60) eine parallel zur Schlitzöffnung (62) ausgerichtete Rastvertiefung (68) zur Aufnahme der im Bereich der randoffenen Aussparung (80) befindlichen freien Deckelkante in geöffneter Endstellung des Klappdeckels (20) aufweist.

5. Behälter nach einem der Ansprüche 1 bis 4, **dadurch gekennzeichnet,** daß der Klappdeckel (20) in einem begrenzten Schwenkbereich außerhalb der geschlossenen und der geöffneten Endstellung vom Unterteil nach oben abnehmbar ist.

6. Behälter zur stehenden Aufnahme von flachen, vorzugsweise rechteckigen oder quadratisch Gegenständen, wie Disketten (12) oder dergleichen, mit einem eine Standfläche (28,30,34) und mehrere im Abstand voneinander angeordnete, vorzugsweise zueinander parallele Einstellfächer (10) für die Gegenstände (12) aufweisenden Unterteil (14) und mit einem am Unterteil (14) angelenkten Klappdeckel (20), wobei jedes der Einstellfächer (10) bodenseitig durch zwei langgestreckte, in ihrer Längserstreckung schräg nach oben über die Ebene der Standfläche (28,30,34) überstehende, paarweise einen nach oben offenen Winkel miteinander einschließende Auflageflächen (42,449 für die einzustellenden Gegenstände (12) begrenzt sind, **dadurch gekennzeichnet,** daß am Klappdeckel (20) mindestens eine Scharnierlasche (82) angeformt ist, die in eine Schlitzöffnung (62) des Unterteils (14) so lösbar einführbar ist, daß der Klappdeckel (20) nur in einem begrenzten Schwenkbereich außerhalb der geschlossenen und der geöffneten Endstellung vom Unterteil (14) nach oben abnehmbar ist.

7. Behälter nach einem der Ansprüche 1 bis 6, **dadurch** **gekennzeichnet,** daß die Einstellfächer (10) in ihrer Gesamtheit von einer am Unterteil (14) angeformten, im wesentlichen parallel zu den benachbarten Auflageflächen (42,44,50) verlaufenden Schulter (92) umrandet sind, gegen die die freien Randkanten (86,88,90) des Klappdeckels (20) in geschlossenem Zustand dicht anliegen.

8. Behälter nach einem der Ansprüche 1 bis 7, **dadurch** **gekennzeichnet,** daß der Klappdeckel (20) im Bereich einer freien Randkante (90) eine randoffene Greifaussparung (94) aufweist.

9. Behälter nach Anspruch 8, **dadurch gekennzeichnet,** daß das Unterteil (14) im Bereich der Greifaussparung (94) des Klappdeckels eine Griffmulde (96) aufweist.

10. Behälter nach Anspruch 8 oder 9, **gekennzeichnet** **durch** ein oberhalb der Greifaussparung (94) am Klappdeckel (20) angeordnetes, geriffeltes oder aufgerauhtes Greiffeld (98).

11. Behälter nach einem der Ansprüche 1 bis 10, **da****durch gekennzeichnet,** daß die vorderen Auflageflächen (42) der Einstellfächer (10) und die Standfläche (28,30,34) des Unterteils (14) einen keilförmigen Sockel (22) bilden, an dessen rückwärtigem Ende die Rückwand (18) schräg nach hinten übersteht und dessen vorderes Ende durch eine zur Rückwand (18) im wesentlichen parallele Vorderwand (24) begrenzt ist.

12. Behälter nach Anspruch 11, **dadurch gekennzeichnet,** daß in die Vorderwand (24) eine langgestreckte Ablagewanne (100) eingeformt ist.

13. Behälter nach Anspruch 11 oder 12, **dadurch** **gekenn****zeichnet,** daß die Standfläche im wesentlichen durch am Sockel (22) nach unten weisende Randkanten (28, 30,34) gebildet ist.

14. Behälter nach Anspruch 13, **dadurch** **gekennzeichnet,** daß zumindest im rückwärtigen Bereich nach unten über die Randkante (28,30,34) des Sockelteils (22) überstehende Standfüße (38) aus elastomerem Material angeordnet sind.

15. Behälter nach einem der Ansprüche 1 bis 14, **da****durch gekennzeichnet,** daß am Unterteil (14), vorzugsweise im Bereich der Außenseite der schrägen Rückwand (18) eine bis zur Standfläche reichende senkrechte Stützstruktur oder Stützwand (32) angeformt ist.

16. Behälter nach einem der Ansprüche 1 bis 15, **da****durch gekennzeichnet,** daß der Klappdeckel (20) einen teilweise offenen Hohlkörper bildet, der an zwei durch eine gemeinsame Kante (71) miteinander verbundenen, im wesentlichen rechteckigen Breitseitenwänden (72,74) und zwei einander gegenüberliegenden, mit den Breitseitenwänden verbundenen, im wesentlichen quadratischen Schmalseitenwänden (76, 78) geschlossen ist, und dessen Breitseitenwände (72,74) je eine der gemeinsamen Kante (71) gegenüberliegende freie Randkante (90, Scharnierlaschen 82) und dessen Schmalseitenwände zwei zueinander senkrechte freie Randkanten (86,88) aufweisen.

17. Behälter nach einem der Ansprüche 1 bis 15, **dadurch** **gekennzeichnet,** daß der Klappdeckel einen teilweise offenen Hohlkörper bildet, der an einer viertelzylindrischen Breitseitenwand und zwei einander gegenüberliegenden, mit der Breitseitenwand verbundenen Schmalseitenwänden geschlossen ist, und dessen Breitseitenwand zwei einander gegenüberliegende freie Randkanten und dessen Schmalseitenwände je zwei zueinander senkrechte freie Randkanten aufweisen.

## Claims

1. Container for the upright storage of flat, preferentially rectangular or quadratic objects, such as diskettes (12) or the like, with a lower portion (14) having a standing surface (28, 30, 34) and several insertion compartments (10) for the objects (12) arranged at a distance from one another, preferentially parallel to one another, and with a hinged cover (20) hinged to the lower portion (14), wherein each of the insertion compartments (10) is limited on the base side by two elongated supporting surfaces (42, 44) for the objects (12) to be inserted, projecting obliquely upwards over the plane of the standing surface (28, 30, 34) in their longitudinal extension, in pairs enclosing with one another an angle which is open towards the top, characterised in that at least one hinge strap (82), open at the rim, curved inwards towards the inside of the cover, is moulded onto a free wide side rim edge of the hinged cover (20), said hinge strap (82) being introducible into a slit opening (62) arranged in the region of the upper edge (16) of the rear wall (18) of the lower portion and partially enclosing, with its concave side, open at the rim, a hinge pin (64) in the form of a rib moulded onto the lower portion in the region of the slit opening (62) and, during opening and closing of the hinged cover, being guided with its convex outer surface on a sliding surface (ridge 66) limiting the slit openings (62).

2. Container according to claim 1, characterised by at least one holding tab (84) moulded on in the region of the hinge strap (82), bent in a hook shape against the curvature of the hinge, engaging behind a ridge (66) limiting the slit opening (62) when the hinged cover (20) is in the closed end position and, when the cover is open, preferentially striking against the rear wall (18).

3. Container according to claim 1 or 2, characterised in that the slit opening (62) is interrupted by at least one bridge of material (60) and the hinge strap (82) is interrupted by at least one recess (80), open at the rim, enclosing the bridge of material (60).

4. Container according to claim 3, characterised in that the bridge of material (60) has a snap-in indentation (68) aligned parallel to the slit opening (62) for receiving the free edge of the cover located in the region of the recess (80), open at the rim, when the hinged cover (20) is in the opened end position.

5. Container according to one of claims 1 to 4, characterised in that the hinged cover (20) is removable upwards from the lower portion in a limited swivelling range outside the closed and the opened end position.

6. Container for the upright storage of flat, preferentially rectangular or quadratic objects, such as diskettes (12) or the like, with a lower portion (14) having a standing surface (28, 30, 34) and several insertion compartments (10) for the objects (12) arranged at a distance from one another, preferentially parallel to one another, and with a hinged cover (20) hinged to the lower portion (14), wherein each of the insertion compartments (10) is limited on the base side by two elongated supporting surfaces (42, 44) for the objects (12) to be inserted, projecting obliquely upwards over the plane of the standing surface (28, 30, 34) in their longitudinal extension, in pairs enclosing with one another an angle which is open at the top, characterised in that at least one hinge strap (82) is moulded onto the hinged cover (20), said hinge strap (82) being removably introducible into a slit opening (62) of the lower portion (14) so that the hinged cover (20) is only removable upwards from the lower portion (14) in a limited swivelling range outside the closed and the opened end position.

7. Container according to one of claims 1 to 6, characterised in that the insertion compartments (10) in their entirety are bordered by a shoulder (92) moulded onto the lower portion (14), extending substantially parallel to the adjacent supporting surfaces (42, 44, 50), against which the free rim edges (86, 88, 90) of the hinged cover (20) lie closely in the closed state.

8. Container according to one of claims 1 to 7, characterised in that the hinged cover (20) has a gripping recess, open at the rim, in the region of a free rim edge (90).

9. Container according to claim 8, characterised in that the lower portion (14) has a recessed grip (96) in the region of the gripping recess (94) of the hinged cover.

10. Container according to claim 8 or 9, characterised by a fluted or roughened gripping field (98) arranged above the gripping recess (94) on the hinged cover (20).

11. Container according to one of claims 1 to 10, characterised in that the front supporting surfaces (42) of the insertion compartments (10) and the standing surface (28, 30, 34) of the lower portion (14) form a wedge-shaped pedestal (22), at the rear end of which the rear wall (18) projects obliquely backwards and the front end of which is limited by a front wall (24) substantially parallel to the rear wall (18).

12. Container according to claim 11, characterised in that an elongated storage tray (100) is moulded into the front wall (24).

13. Container according to claim 11 or 12, characterised in that the standing surface is substantially formed by rim edges (28, 30, 34) pointing downwards on the pedestal (22).

14. Container according to claim 13, characterised in that, standing feet (38), made of an elastomeric material, projecting downwards over the rim edge (28, 30, 34) of the pedestal portion (22) are arranged at least in the rear region.

15. Container according to one of claims 1 to 14, characterised in that a supporting structure or supporting wall (32), extending perpendicularly towards the standing surface, is moulded onto the lower portion (14), preferentially in the region of the outside of the inclined rear wall (18).

16. Container according to one of claims 1 to 15, characterised in that the hinged cover (20) forms a partially open hollow body, which is closed at two substantially rectangular wide side walls (72, 74), joined to one another by a common edge (71), and two substantially quadratic narrow side walls (76, 78), lying opposite one another, joined to the wide side walls, and the wide side walls (72, 74) of which each have a free rim edge (90, hinge straps 82) opposite the common edge (71) and the narrow side walls of which have two free rim edges (86, 88) perpendicular to one another.

17. Container according to one of claims 1 to 15, characterised in that the hinged cover forms a partially open hollow body, which is closed at a quarter cylindrical wide side wall and two narrow side walls, opposite one another, joined to the wide side wall, and the wide side wall of which has two rim edges lying opposite one another and the narrow side walls of which each have two free rim edges perpendicular to one another.

## Revendications

1. Récipient pour la réception verticale d'objets plats, de préférence rectangulaires ou carrés, tels que des disquettes (12) ou analogues, comprenant une partie inférieure (14) avec une surface de base (28, 30, 34) et plusieurs cases de réception (10) pour la mise en place des objets (12), disposées à distance et de préférence parallèlement les unes par rapport aux autres, et un couvercle rabattable (20) articulé sur la partie inférieure (14), chacune des cases de réception (10) étant délimitée, du côté fond, par deux surfaces d'appui (42, 44) allongées pour les objets (12) à mettre en place, qui, dans le sens de leur extension longitudinale, dépassent en oblique vers le haut du plan de la surface de base (28, 30, 34) et renferment, par paires, un angle ouvert vers le haut, **caractérisé en ce** que sur l'un des bords libres des côtés larges du couvercle rabattable (20) est conformée au moins une patte de charnière (82) cintrée vers l'intérieur du couvercle, laquelle peut être insérée dans une fente (62) ménagée dans la région du bord supérieur (16) de la paroi arrière (18) de la partie inférieure et enveloppe partiellement, avec sa face concave ouverte au bord, une cheville de charnière (64) conformée sur la partie inférieure sous la forme d'une nervure dans la région de la fente (62), et dont la surface extérieure concave est guidée, lors de l'ouverture et de la fermeture du couvercle rabattable, sur une surface de glissement (barrette 66) délimitant les ouvertures (62) de la fente.

2. Récipient selon la revendication 1, caractérisé en ce qu'il comprend au moins un talon de retenue (84) conformé dans la région de la patte de charnière (82), courbé en crochet dans le sens opposé à la courbure de la charnière, qui, dans la position extrême de fermeture du couvercle rabattable (20), passe derrière une barrette (66) délimitant l'ouverture (62) de la fente et, dans la position d'ouverture du couvercle, bute de préférence contre la paroi arrière (18).

3. Récipient selon l'une des revendications 1 ou 2, caractérisé en ce que l'ouverture (62) de la fente est interrompue par au moins un pont de matière (60) et que la patte de charnière (82) présente au moins un évidement (80) ouvert au bord qui enveloppe le pont de matière (60).

4. Récipient selon la revendication 3, caractérisé en ce que le pont de matière (60) est muni d'un creux d'encliquetage (68) orienté parallèlement à l'ouverture (62) de la fente et destiné à recevoir, dans la position extrême d'ouverture du couvercle rabattable (20), le bord libre du couvercle situé dans la région de l'évidement (80) au bord ouvert.

5. Récipient selon l'une des revendications 1 à 4, caractérisé en ce que le couvercle rabattable (20) peut être retiré vers le haut de la partie inférieure à l'intérieur d'une plage de pivotement limitée, en dehors des positions extrêmes de fermeture et d'ouverture.

6. Récipient pour la réception verticale d'objets plats, de préférence rectangulaires ou carrés, tels que des disquettes (12) ou analogues, comprenant une partie inférieure (14) avec une surface de base (28, 30, 34) et plusieurs cases de réception (10) pour la mise en place des objets (12), disposées à distance et de préférence parallèlement les unes par rapport aux autres, et un couvercle rabattable (20) articulé sur la partie inférieure (14), chacune des cases de réception (10) étant délimitée, du côté fond, par deux surfaces d'appui (42, 44) allongées pour les objets (12) à mettre en place, qui, dans le sens de leur extension longitudinale, dépassent en oblique vers le haut du plan de la surface de base (28, 30, 34) et renferment, par paires, un angle ouvert vers le haut, caractérisé en ce que sur le couvercle rabattable (20) est conformée au moins une patte de charnière (82) qui peut être insérée de manière amovible dans l'ouverture (62) d'une fente ménagée dans la partie inférieure (14), de telle façon que, en dehors des positions extrêmes de fermeture et d'ouverture, le couvercle rabattable (20) ne peut être retiré vers le haut de la partie inférieure (14) qu'à l'intérieur d'une plage de pivotement limitée.

7. Récipient selon l'une des revendications 1 à 6, caractérisé en ce que les cases de réception (10) sont bordées dans leur totalité par un épaulement (92) conformé sur la partie inférieure (14) et s'étendant sensiblement parallèlement aux surfaces d'appui (42, 44, 50) voisines, contre lequel les bords périphériques libres (86, 88, 90) du couvercle rabattable (20) sont appliqués de manière serrée à l'état fermé.

8. Récipient selon l'une des revendications 1 à 7, caractérisé en ce que le couvercle rabattable (20) présente dans la région de son bord périphérique libre (90) un évidement de préhension (94) au bord ouvert.

9. Récipient selon la revendication 8, caractérisé en ce que la partie inférieure (14) comporte, dans la région de l'évidement de préhension (94) du couvercle rabattable, une poignée concave (96).

10. Récipient selon l'une des revendications 8 ou 9, caractérisé en ce qu'il présente un champ de préhension (98) rainuré ou granité disposé sur le couvercle rabattable (20), au-dessus de l'évidement de préhension (94).

11. Récipient selon l'une des revendications 1 à 10, caractérisé en ce que les surfaces d'appui antérieures (42) des cases de réception (10) et la surface de base (28, 30, 34) de la partie inférieure (14) constituent un socle (22) en forme de coin à l'extrémité postérieure duquel la paroi arrière (18) dépasse en oblique vers le bas et dont l'extrémité antérieure est délimitée par une paroi avant (24) sensiblement parallèle à la paroi arrière (18).

12. Récipient selon la revendication 11, caractérisé en ce qu'une cuvette de réception (100) allongée est conformée dans la paroi avant (24).

13. Récipient selon l'une des revendications 11 ou 12, caractérisé en ce que la surface de base est constituée pour l'essentiel par des bords périphériques (28, 30, 34) du socle (22) dirigés vers le bas.

14. Récipient selon la revendication 13, caractérisé en ce que des pieds (38) réalisés à partir d'une matière élastomère et dépassant vers le bas du bord périphérique (28, 30, 34) du socle (22), sont disposés au moins dans la région postérieure.

15. Récipient selon l'une des revendications 1 à 14, caractérisé en ce que sur la partie inférieure (14), de préférence dans la région de la face extérieure de la paroi arrière (18) inclinée, est conformée une structure ou paroi de soutien verticale (32) qui s'étend jusqu'à la surface de base.

16. Récipient selon l'une des revendications 1 à 15, caractérisé en ce que le couvercle rabattable (20) constitue un corps creux partiellement ouvert qui est fermé, sur deux côtés larges (72, 74) sensiblement rectangulaires réunis par une arête commune (71) et sur deux côtés étroits (76, 78) sensiblement quadratiques situés en face l'un de l'autre et respectivement raccordés aux côtés larges, et dont les côtés larges (72, 74) présentent chacun un bord périphérique libre (90, pattes de charnière 82) opposé à l'arête commune (71) et dont les côtés étroits présentent deux bords périphériques libres (86, 88) perpendiculaires l'un par rapport à l'autre.

17. Récipient selon l'une des revendications 1 à 15, caractérisé en ce que le couvercle rabattable constitue un corps creux partiellement ouvert qui est fermé sur un côté large conformé en quart de cylindre et sur deux côtés étroits disposés en face l'un de l'autre et raccordés au côté large, et dont le côté large présente deux bords périphériques situés en face l'un de l'autre, et dont les côtés étroits sont munis chacun de deux bords périphériques libres perpendiculaires l'un par rapport à l'autre.
